# EUROPÄISCHE PATENTSCHRIFT

(11) **EP 3 612 698 B1**
(45) Veröffentlichungstag und Bekanntmachung des Hinweises auf die Patenterteilung: **31.03.2021**
(21) Anmeldenummer: 18708577.4
(22) Anmeldetag: 15.02.2018
(51) Int. Cl.: E05D 7/10, E05D 5/12

(54) **SCHARNIER FÜR EIN SCHALTSCHRANKGEHÄUSE SOWIE EIN ENTSPRECHENDES SCHALTSCHRANKGEHÄUSE UND MONTAGEVERFAHREN**
HINGE FOR A SWITCHGEAR CABINET HOUSING AND CORRESPONDING SWITCHGEAR CABINET HOUSING AND MOUNTING METHOD
CHARNIÈRE POUR BOÎTIER D'ARMOIRE DE COMMANDE AINSI QUE BOÎTIER D'ARMOIRE DE COMMANDE ET PROCÉDÉ DE MONTAGE CORRESPONDANTS

(30) Priorität: 21.04.2017 DE 102017108586
(43) Veröffentlichungstag der Anmeldung: 26.02.2020
(73) Patentinhaber: Rittal GmbH & Co. KG, 35745 Herborn (DE)
(72) Erfinder: GEORG, Frank-Mike, 35683 Dillenburg (DE); BLOH, Achim, 35644 Hohenahr-Ahrdt (DE); RAMDOHR, Martin, 35759 Driedorf-Waldaubach (DE); NEUHOF, Markus, 35630 Ehringshausen-Niederlemp (DE)
(74) Vertreter: Angerhausen, Christoph
(86) Internationale Anmeldenummer: PCT/DE2018/100138
(87) Internationale Veröffentlichungsnummer: WO 2018/192606

(56) Entgegenhaltungen:
- EP-A1- 0 340 456
- EP-A2- 2 476 844
- WO-A1-98/55720
- DE-U1- 9 000 424

## Beschreibung

Die Erfindung geht aus von einem Scharnier für ein Schaltschrankgehäuse mit einer ersten und einer zweiten Scharnierhälfte, die über einen Scharnierbolzen miteinander verbindbar und um eine Längsachse des Scharnierbolzens zueinander verschwenkbar sind. Dabei erstreckt sich der Scharnierbolzen in einer Freigabeposition nur in die erste oder die zweite Scharnierhälfte und in einer Verriegelungsposition sowohl in die erste als auch in die zweite Scharnierhälfte hinein, wobei der Scharnierbolzen sowohl in der Freigabeposition als auch in der Verriegelungsposition über mindestens eine Federspange lösbar arretiert ist. Ein derartiges Scharnier ist aus der EP 2476844 A2 bekannt. Ein ähnliches Scharnier beschreiben auch die DE 198 37 379 B4, die EP 0340456 A1 und die WO 98/55720 A1.

Die bekannten Scharniere haben den Nachteil, dass sie umständlich in der Montage sind. Bei der Montage eines Türelements an einem Schaltschrankkorpus wird üblicherweise zunächst eine erste Scharnierhälfte an dem Türelement und eine zweite Scharnierhälfte an dem Schaltschrankkorpus befestigt. Häufig weist das Schaltschrankgehäuse an seiner Scharnierseite mindestens zwei derartiger Scharniere vertikal beabstandet auf. Nach der Vormontage der Scharnierhälften an dem Schaltschrankkorpus und dem Türelement wird das Türelement mit dem Schaltschrankkorpus zusammengeführt, so dass eine erste Scharnierbolzenhülse der türelementseitigen Scharnierhälfte mit einer zweiten Scharnierbolzenhülse der schaltschrankkorpusseitigen Scharnierhälfte fluchtet. Während es bereits mühselig ist, das Türelement und den Schaltschrankkorpus in der zuvor beschriebenen Ausrichtung zueinander präzise anzuordnen und in dieser Position zu halten, ist es nach erfolgter Ausrichtung weiterhin erforderlich, einen Scharnierbolzen in die fluchtenden Scharnierbolzenhülsen einzusetzen und einzuschlagen, so dass die Scharnierhälften schließlich miteinander verbunden sind.

Es ist daher die Aufgabe der Erfindung, ein Scharnier der zuvor beschriebenen Art derart weiterzuentwickeln, dass es die einfache Montage eines Türelements an einem Schaltschrankkorpus erlaubt.

Diese Aufgabe wird durch ein Scharnier mit den Merkmalen des Anspruchs 1 gelöst. Der nebengeordnete Anspruch 9 betrifft ein Schaltschrankgehäuse mit entsprechendem Scharnier. Vorteilhafte Ausführungsformen der Erfindung sind jeweils Gegenstand der abhängigen Ansprüche.

Demgemäß ist vorgesehen, dass die Federspange einen Spannabschnitt aufweist, der sich entlang eines Außenumfangs einer Scharnierbolzenhülse der ersten oder der zweiten Scharnierhälfte erstreckt, sowie eine an den Spannabschnitt angeformte Arretierungsklinke, die sich in Radialrichtung der Scharnierbolzenhülse erstreckt, wobei die Federspange einen Gegenhalter aufweist, der unter einem Abstand zu der Arretierungsklinke an den Spannabschnitt angeformt ist, und wobei die Federspange ein Blechformteil ist, das an einem ersten von zwei gegenüber liegenden Enden des als Blechstreifen ausgebildeten Spannabschnitts die Arretierungsklinke und an einem zweiten der zwei gegenüber liegenden Enden den Gegenhalter aufweist.

Es wird somit ein Scharnier geschaffen, welches es erlaubt, dass der Scharnierbolzen bereits vor dem Zusammenführen von Türelement und Schaltschrankkorpus in eine der Scharnierhälften eingesetzt und dort in einer definierten Freigabeposition arretiert werden kann. Dies erlaubt es, dass nach dem Zusammenführen des Türelements mit dem Schaltschrankkorpus der Scharnierbolzen lediglich noch aus seiner Freigabeposition in die Verriegelungsposition überführt werden muss, in welcher er die beiden Scharnierhälften zueinander verschwenkbar festlegt. Aufgrund der definierten Arretierungen ist es auch nicht mehr erforderlich, dass der Bolzen im Reibsitz in den Scharnierhülsen sitzt, damit er in dem Scharnier gesichert ist. Ein Formschluss zwischen Bolzen und Scharnierhülse ist ausreichend. Folglich muss der Bolzen auch nicht mehr eingeschlagen werden, sondern kann komfortabel manuell und gegebenenfalls auch ohne Werkzeug zwischen der Freigabeposition und der Verriegelungsposition verstellt werden.

Der Scharnierbolzen kann entlang seiner Längsachse zueinander beabstandet eine erste und eine zweite Ausnehmung, insbesondere eine erste und eine zweite Ringnut aufweisen. Dabei kann die Federspange in der Freigabeposition in die erste Ausnehmung und in der Verriegelungsposition in die zweite Ausnehmung eingreifen.

Eine der Scharnierhälften kann eine erste Scharnierbolzenhülse mit einer ersten Federspange und eine zweite Scharnierbolzenhülse mit einer zweiten Federspange aufweisen. Dabei können die Scharnierbolzenhülsen entlang der Längsachse des Scharnierbolzens um einen Abstand zueinander angeordnet sein, wobei in der Freigabeposition der Scharnierbolzen nur über die erste Federspange arretiert ist, und wobei in der Verriegelungsposition der Scharnierbolzen über die erste und die zweite Federspange arretiert ist. Durch die nur einfache Arretierung des Scharnierbolzens in der Freigabeposition ist dieser bei der Montage des Türelements an dem Schaltschrankkorpus leicht aus der Arretierung zu lösen, um ihn in die Verriegelungsposition zu überführen. In der Verriegelungsposition wiederum ist der Scharnierbolzen jedoch doppelt gesichert, um ein versehentliches Herauslösen des Scharnierbolzens während des Gebrauchs des Schaltschrankgehäuses zu vermeiden.

Die Arretierungsklinke kann sich durch einen in Radialrichtung der Scharnierbolzenhülse erstreckenden Durchlass durch die Scharnierbolzenhülse erstrecken und über den Spannabschnitt in die Radialrichtung vorgespannt sein.

Mindestens eines von Arretierungsklinke, erster Ausnehmung und zweiter Ausnehmung kann an mindestens einem von zwei in Längsrichtung des Scharnierbolzens zueinander beabstandeten Begrenzungsrändern eine Anlaufschräge aufweisen. Die Anlaufschräge kann insbesondere dazu dienen, um ein Überführen des Scharnierbolzens aus der Freigabeposition in die Verriegelungsposition zu begünstigen, insbesondere indem der Scharnierbolzen in Richtung seiner Längsachse mit einer Kraft in Richtung Verriegelungsposition beaufschlagt wird. Dabei kann die Arretierungsklinke unter Vorspannung des Spannabschnitts aus der Ausnehmung beziehungsweise Ringnut am Außenumfang des Scharnierbolzens heraustreten, so dass der Scharnierbolzen von der Freigabeposition in die Verriegelungsposition überführbar ist. Umgekehrt kann der Scharnierbolzen in der Verriegelungsposition durch Kraftbeaufschlagung entlang der Längsachse des Scharnierbolzens und in Richtung der Freigabeposition von der Verriegelungsposition in die Freigabeposition überführt werden.

Der Gegenhalter kann sich in einen sich in Radialrichtung der Scharnierbolzenhülse erstreckenden weiteren Durchlass durch die Scharnierbolzenhülse erstrecken. Insbesondere kann sich der Gegenhalter über den weiteren Durchlass durch die Scharnierbolzenhülse hindurch erstrecken, wobei er unmittelbar am Außenumfang des Scharnierbolzens abgestützt ist.

Der weitere Durchlass kann um einen Winkel von mindestens 90° und vorzugsweise um einen Winkel von im Wesentlichen 180° gegenüber dem Durchlass für die Arretierungsklinke um die Längsachse versetzt angeordnet sein.

Dadurch, dass die Federspange ein Blechformteil ist, das an einem ersten von zwei gegenüberliegenden Enden des als Blechstreifen ausgebildeten Spannabschnitts die Arretierungsklinke und an einem zweiten der zwei gegenüberliegenden Enden den Gegenhalter aufweist, kann die Federspange ein durch Stanzen und Kanten erhältliches Federstahlbauteil sein.

Gemäß einem anderen Aspekt wird ein Schaltschrankgehäuse beschrieben, welches einen Schaltschrankkorpus und ein daran über mindestens ein Scharnier der zuvor beschriebenen Art festgelegtes Türelement aufweist.

Ein Verfahren für die Montage eines Türelements an einem Schaltschrankkorpus weist die Schritte auf:
- Bereitstellen eines Schaltschrankkorpus, eines Türelements sowie mindestens eines Scharniers der zuvor beschrieben Art,
- Montieren der ersten Scharnierhälfte an dem Schaltschrankkorpus und der zweiten Scharnierhälfte an dem Türelement,
- Einsetzen des Scharnierbolzens in eine erste Scharnierbolzenhülse der ersten oder der zweiten Scharnierhälfte und Arretieren des Scharnierbolzens in der Freigabeposition;
- Zusammenführen des Türelements mit dem Schaltschrankkorpus, so dass die erste Scharnierbolzenhülse mit einer zweiten Scharnierbolzenhülse der anderen Scharnierhälfte fluchtet, und
- Überführen des Scharnierbolzens aus der Freigabeposition in die Verriegelungsposition und Arretieren des Scharnierbolzens in der Verriegelungsposition.

Weiterhin kann vor dem Überführen des Scharnierbolzens aus der Freigabeposition in die Verriegelungsposition die Arretierung des Scharnierbolzens in der Freigabeposition gelöst werden.

Schließlich kann vorgesehen sein, dass für das Lösen der Arretierung der Scharnierbolzen in der Freigabeposition mit einer Kraft entlang seiner Längsachse und in Richtung der Verriegelungsposition beaufschlagt und dabei die Federspange vorgespannt wird, so dass eine Arretierungsklinke der Federspange mit einer Ausnehmung des Scharnierbolzens außer Eingriff tritt.

Die Freigabeposition und die Verriegelungsposition können definierte Arretierungspositionen des Scharnierbolzens sein. Insbesondere kann der Scharnierbolzen außerhalb der Arretierungspositionen frei beweglich in den Scharnierhülsen aufgenommen sein, beispielsweise im Formschluss, wobei insbesondre erfindungsgemäß kein Reibsitz des Scharnierbolzens in den Scharnierhülsen erforderlich ist.

Weitere Einzelheiten der Erfindung werden anhand der nachstehenden Figuren erläutert. Dabei zeigt:
- Figur 1: eine erste Scharnierhälfte mit in der Verriegelungsposition angeordnetem Scharnierbolzen in perspektivischer Darstellung gemäß einer Ausführungsform der Erfindung;
- Figur 2: ein Schaltschrankgehäuse im Querschnitt senkrecht zur Längsachse des Scharnierbolzens und in perspektivischer Darstellung gemäß einer Ausführungsform der Erfindung; und
- Figur 3: eine Scharnierhälfte mit eingesetztem Scharnierbolzen im Querschnitt senkrecht zur Längsachse des Scharnierbolzens und im Bereich der Federspange sowie in perspektivischer Darstellung gemäß einer Ausführungsform der Erfindung.

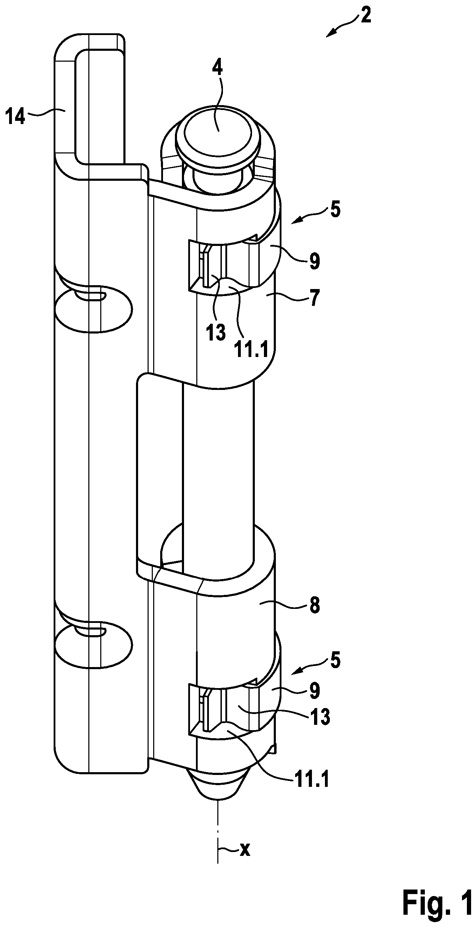

Figur 1 zeigt eine erste Ausführungsform einer ersten Scharnierhälfte 2 mit sich in der Verriegelungsposition befindlichem Scharnierbolzen 4. Die Längsachse x des Scharnierbolzens bildet die Schwenkachse des Scharniers, wie dies bei Scharnieren aus dem Stand der Technik grundsätzlich bekannt ist. Die erste Scharnierhälfte 2 weist eine erste Scharnierbolzenhülse 7 und eine zweite Scharnierbolzenhülse 8 auf, die unter einem Abstand zueinander angeordnet sind. Zwischen den Scharnierbolzenhülsen 7, 8 kann eine weitere Scharnierbolzenhülse einer zweiten Scharnierhälfte (nicht dargestellt) eingesetzt werden, so dass die drei Scharnierbolzenhülsen miteinander fluchten. Wenn sich der Scharnierbolzen 4 in der Freigabeposition befindet, bei welcher er in der Darstellung nach oben herausgezogen ist gibt der Scharnierbolzen 4 den Bereich zwischen den Scharnierbolzenhülsen 7, 8 der ersten Scharnierhälfte frei, so dass eine dritte Scharnierbolzenhülse der zweiten Scharnierhälfte (nicht dargestellt) zwischen der ersten und der zweiten Scharnierbolzenhülse 7, 8 aufgenommen werden kann.

In der genannten Freigabeposition ist das in der Darstellung gemäß Figur 1 untere Ende des Scharnierbolzens 4 in die erste Scharnierbolzenhülse 7 zurückgezogen und über die Federspange 5 der oberen Scharnierbolzenhülse 7 arretiert.

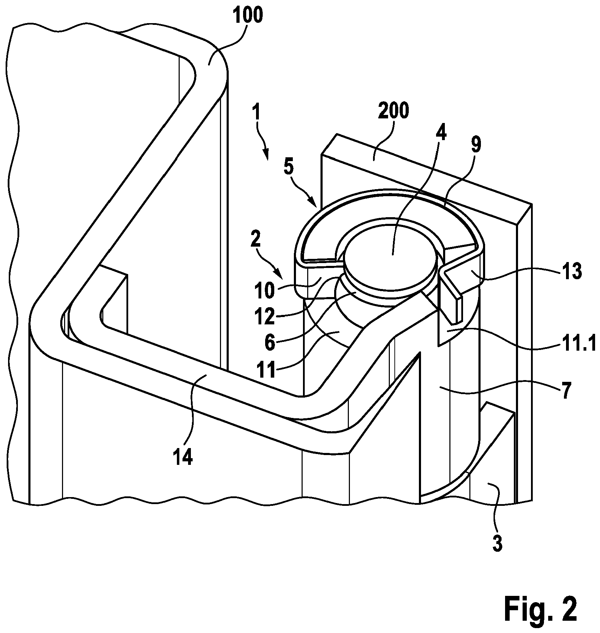

Wenn in dieser Anordnung von erster Scharnierhälfte 2 und Scharnierbolzen 4 eine zweite Scharnierhälfte mit ihrer weiteren Scharnierbolzenhülse zwischen den Scharnierbolzenhülsen 7, 8 der ersten Scharnierhälfte 2 derart angeordnet wird, dass die drei Durchlässe der Scharnierbolzenhülsen fluchten, kann der Scharnierbolzen 4 aus der Freigabeposition in die Verriegelungsposition überführt werden, indem er durch Kraftbeaufschlagung unter Vorspannung der Federspange 5 und damit Lösung der Arretierung des Scharnierbolzens 4 in der Freigabeposition, in die Verriegelungsposition überführt wird, um dort jeweils über beide Federspangen 5 sowohl der ersten Scharnierbolzenhülse 7 als auch der zweiten Scharnierbolzenhülse 8 arretiert zu werden. Die Federspange 5 weist einen Spannabschnitt 9 auf, der im Wesentlichen eine äußere Kontur der Scharnierbolzenhülsen 7,8 abbildet und somit flächig an dem Außenumfang der Scharnierbolzenhülsen 7,8 anliegt. Der Spannabschnitt 9 ist im Wesentlichen als ein Federstahlblechstreifen ausgebildet, an dessen gegenüberliegenden Enden der Gegenhalter 13 beziehungsweise die Arretierungsklinke 10 (siehe Figur 2) ausgebildet sind. Der Gegenhalter 13 erstreckt sich über einen weiteren Durchlass 11.1, der sich in Radialrichtung zu der ersten Scharnierbolzenhülse 7 beziehungsweise der zweiten Scharnierbolzenhülse 8 erstreckt, durch die jeweilige Scharnierbolzenhülse 7, 8 hindurch, um an einem Außenumfang des Scharnierbolzens anzuliegen und somit die Federspange gegen den Scharnierbolzen 4 abzustützen, wenn bei der Überführung des Scharnierbolzens 4 aus der Freigabeposition in die Verriegelungsposition oder aus der Verriegelungsposition in die Freigabeposition die Federspange 5 unter Deformation des Spannabschnitts 9 vorgespannt wird, so dass die Arretierungsklinke 10 (siehe Figur 2) aus der Ausnehmung am Außenumfang des Scharnierbolzens 4 heraustritt.

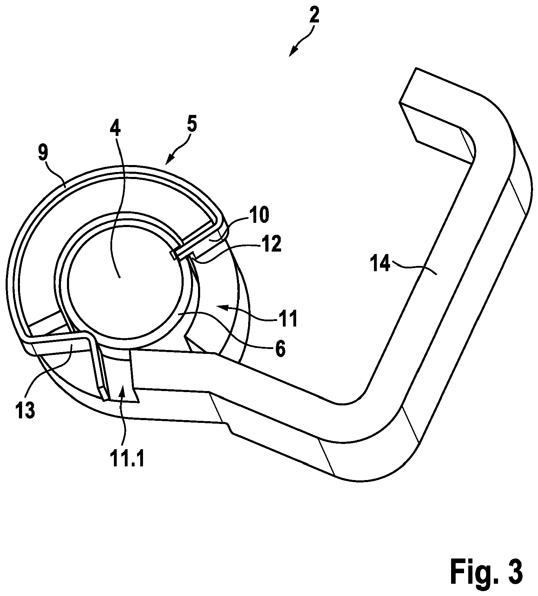

Dies ist weiter im Detail mit Bezug auf die Figuren 2 und 3 erklärt. Die Figur 2 zeigt ein Schaltschrankgehäuse bestehend aus einem Schaltschrankkorpus 100 und einem daran über ein Scharnier 1 der zuvor mit Bezug auf Figur 1 beschriebenen Art festgelegten Türelement 200. Zur besseren Veranschaulichung der dargestellten Ausführungsform der Erfindung ist das Schaltschrankgehäuse in einer Schnittebene senkrecht zur Längsachse x des Scharnierbolzens und im Bereich der Federspange 5 gezeigt.

Die erste Scharnierhälfte 2 ist über seinen Montageflansch 14 innerhalb einer U-Umkantung des Schaltschrankkorpus festgelegt. Die erste Scharnierbolzenhülse 7 ist an dem Montageflansch 14 unmittelbar angeformt. Insbesondere kann die erste Scharnierhälfte 2 ein durch Stanzen und Kanten erhältliches Blechformteil sein. Die Scharnierbolzenhülse 7 weist erkennbar an im Wesentlichen gegenüberliegenden Positionen einen Durchlass 11 und einen weiteren Durchlass 11.1 auf, wobei sich die Durchlässe 11, 11.1 im Wesentlichen radial zur Längsachse x des Scharnierbolzens 4 durch die Scharnierbolzenhülse 7 erstrecken.

Der Gegenhalter 13 ist im Wesentlichen eine 90°-Umkantung, die über einen stumpfen Winkel von dem Spannabschnitt 9 der Federspange 5 abgekantet ist, so dass sich die Federspange ausgehend von dem Spannabschnitt 9 über den Gegenhalter 13 durch die Wandung der ersten Scharnierbolzenhülse 7 hindurcherstreckt, bis sie am Innenumfang der ersten Scharnierbolzenhülse 7 auf den Außenumfang des Scharnierbolzens 4 trifft und somit am Außenumfang des Scharnierbolzens 4 abgestützt ist.

An dem gegenüberliegenden Ende des Spannabschnitts 9 ist die Arretierungsklinke 10 über eine weitere Abkantung an den Spannabschnitt 9 angeformt und erstreckt sich im Wesentlichen in Radialrichtung der Scharnierbolzenhülse 7 durch den Durchlass 11 der Scharnierbolzenhülse 7 hindurch, wobei die Arretierungsklinke 10 an ihrem freien Ende eine Spitze aufweist, mit welcher sie in eine Ausnehmung 6 am Außenumfang des Scharnierbolzens eingreift. Die Ausnehmung 6 am Außenumfang des Scharnierbolzens 4 ist vorliegend als eine umlaufend geschlossene Ringnut ausgebildet.

Die Arretierungsklinke 10 weist eine Anlaufschräge 12 auf, über welche die Federspange 5 aus der in Figur 2 gezeigten Arretierungsposition in eine gelöste Position überführt wird, wenn bei Kraftbeaufschlagung des Scharnierbolzens in Richtung der Längsachse x des Scharnierbolzens 4 die Arretierungsklinke 10 über die Anlaufschräge 10 aus der Ausnehmung 6 unter Vorspannung des Spannabschnitts 9 herausgedrückt wird, während die Federspange 5 an ihrem gegenüberliegenden Ende über den Gegenhalter 13 an dem Scharnierbolzen 4 abgestützt ist.

### Bezugszeichenliste

- 1: Scharnier
- 2: erste Scharnierhälfte
- 3: zweite Scharnierhälfte
- 4: Scharnierbolzen
- 5: Federspange
- 6: Ausnehmung
- 7: erste Scharnierbolzenhülse
- 8: zweite Scharnierbolzenhülse
- 9: Spannabschnitt
- 10: Arretierungsklinke
- 11: Durchlass
- 12: Anlaufschräge
- 13: Gegenhalter
- 14: Montageflansch
- x: Längsachse

## Patentansprüche

1. Scharnier (1) für ein Schaltschrankgehäuse, mit einer ersten und einer zweiten Scharnierhälfte (2, 3), die über einen Scharnierbolzen (4) miteinander verbindbar und um eine Längsachse (x) des Scharnierbolzens (4) zueinander verschwenkbar sind, wobei sich der Scharnierbolzen (4) in einer Freigabeposition nur in die erste oder die zweite Scharnierhälfte (2, 3) und in einer Verriegelungsposition sowohl in die erste als auch in die zweite Scharnierhälfte (2, 3) hinein erstreckt, wobei der Scharnierbolzen (4) sowohl in der Freigabeposition als auch in der Verriegelungsposition über mindestens eine Federspange (5) lösbar arretiert ist, **dadurch gekennzeichnet, dass** die Federspange (5) einen Spannabschnitt (9) aufweist, der sich entlang eines Außenumfangs einer Scharnierbolzenhülse (7, 8) der ersten oder der zweiten Scharnierhälfte (2, 3) erstreckt, sowie eine an den Spannabschnitt (9) angeformte Arretierungsklinke (10), die sich in Radialrichtung der Scharnierbolzenhülse (7, 8) erstreckt, wobei die Federspange (5) einen Gegenhalter (13) aufweist, der unter einem Abstand zu der Arretierungsklinke (10) an den Spannabschnitt (9) angeformt ist, und wobei die Federspange (5) ein Blechformteil ist, das an einem ersten von zwei gegenüber liegenden Enden des als Blechstreifen ausgebildeten Spannabschnitts (9) die Arretierungsklinke (10) und an einem zweiten der zwei gegenüber liegenden Enden den Gegenhalter (13) aufweist.

2. Scharnier (1) nach Anspruch 1, bei dem der Scharnierbolzen (4) entlang seiner Längsachse (x) zueinander beabstandet eine erste und eine zweite Ausnehmung (6), insbesondere eine erste und eine zweite Ringnut aufweist, wobei die Federspange (5) in der Freigabeposition in die erste Ausnehmung (6) und in der Verriegelungsposition in die zweite Ausnehmung (6) eingreift.

3. Scharnier (1) nach Anspruch 1 oder 2, bei dem eine der Scharnierhälften (2, 3) eine erste Scharnierbolzenhülse (7) mit einer ersten Federspange (5) und eine zweite Scharnierbolzenhülse (8) mit einer zweiten Federspange (5) aufweist.

4. Scharnier (1) nach Anspruch 3, bei dem die Scharnierbolzenhülsen (7, 8) entlang der Längsachse (x) des Scharnierbolzens (4) um einen Abstand zueinander angeordnet sind, wobei in der Freigabeposition der Scharnierbolzen (4) nur über die erste Federspange (5) arretiert ist, und wobei in der Verriegelungsposition der Scharnierbolzen (4) über die erste und die zweite Federspange (5) arretiert ist.

5. Scharnier (1) nach Anspruch 1, bei dem sich die Arretierungsklinke (10) durch einen sich in Radialrichtung der Scharnierbolzenhülse (7, 8) erstreckenden Durchlass (11) durch die Scharnierbolzenhülse (7, 8) erstreckt und über den Spannabschnitt (9) in der Radialrichtung vorgespannt ist.

6. Scharnier (1) nach Anspruch 1, bei dem mindestens eines von Arretierungsklinke (10), erster und zweiter Ausnehmung (6) an mindestens einem von zwei in Längsrichtung des Scharnierbolzens (4) zueinander beabstandeten Begrenzungsrändern eine Anlaufschräge (12) aufweist.

7. Scharnier (1) nach Anspruch 1, bei dem sich der Gegenhalter (13) in einen sich in Radialrichtung der Scharnierbolzenhülse (7, 8) erstreckenden weiteren Durchlass (11.1) durch die Scharnierbolzenhülse (7, 8) erstreckt.

8. Scharnier (1) nach Anspruch 7, bei dem der weitere Durchlass (11.1) um einen Winkel von mindestens 90° und vorzugsweise um einen Winkel von im Wesentlichen 180° gegenüber dem Durchlass (11) für die Arretierungsklinke (10) um die Längsachse (x) versetzt angeordnet ist.

9. Schaltschrankgehäuse mit einem Schaltschrankkorpus (100) und einem daran über mindestens ein Scharnier (1) nach einem der vorangegangen Ansprüche festgelegten Türelement (200).

## Claims

1. A hinge (1) for a switchgear cabinet housing, comprising a first and a second hinge half (2, 3), which can be connected to each other by means of a hinge pin (4) and which can be pivoted relative to each other about a longitudinal axis (x) of the hinge pin (4), wherein the hinge pin (4) extends only into the first or the second hinge half (2, 3) in a release position and extends into both the first and the second hinge halves (2, 3) in a locking position, wherein the hinge pin (4) is releasably locked by means of at least one spring clip (5) both in the release position and in the locking position, **characterized in that** the spring clip (5) comprises a tensioning section (9), which extends along an outer circumference of one hinge pin sleeve (7, 8) of the first or the second hinge half (2, 3), and a locking catch (10), which is formed on the tensioning section (9), and which extends in the radial direction of the hinge pin sleeve (7, 8), wherein the spring clip (5) comprises a counter holder (13), which is formed on the tensioning section (9) at a distance to the locking catch (10), and wherein the spring clip (5) is a shaped sheet-metal part, which comprises the locking catch (10) at a first of two opposing ends of the tensioning section (9) formed as a sheet-metal strip and comprises the counter holder (13) at a second of the two opposing ends.

2. The hinge (1) as claimed in claim 1, in which the hinge pin (4) comprises a first and a second recess (6), in particular a first and a second ring groove, spaced apart in relation to each other along its longitudinal axis (x), wherein the spring clip (5) engages in the first recess (6) in the release position and engages in the second recess (6) in the locking position.

3. The hinge (1) as claimed in claim 1 or 2, in which one of the hinge halves (2, 3) comprises a first hinge pin sleeve (7) having a first spring clip (5) and a second hinge pin sleeve (8) having a second spring clip (5).

4. The hinge (1) as claimed in claim 3, in which the hinge pin sleeves (7, 8) are arranged at a distance in relation to each other along the longitudinal axis (x) of the hinge pin (4), wherein in the release position the hinge pin (4) is only locked via the first spring clip (5), and wherein in the locking position the hinge pin (4) is locked via the first and the second spring clip (5).

5. The hinge (1) as claimed in claim 1, in which the locking catch (10) extends through the hinge pin sleeve (7, 8) through a passage (11) extending in the radial direction of the hinge pin sleeve (7, 8) and is pretensioned in the radial direction via the tensioning section (9).

6. The hinge (1) as claimed in claim 1, in which at least one of locking catch (10) and first and second recess (6) comprises an intake bevel (12) on at least one of two boundary edges spaced apart in relation to each other in the longitudinal direction of the hinge pin (4).

7. The hinge (1) as claimed in claim 1, in which the counter holder (13) extends through the hinge pin sleeve (7, 8) in a further passage (11.1) extending in the radial direction of the hinge pin sleeve (7, 8).

8. The hinge (1) as claimed in claim 7, in which the further passage (11.1) is arranged offset around the longitudinal axis (x) by an angle of at least 90° and preferably by an angle of essentially 180° in relation to the passage (11) for the locking catch (10).

9. A switchgear cabinet housing having a switchgear cabinet body (100) and a door element (200) secured thereon via at least one hinge (1) as claimed in any one of the preceding claims.

## Revendications

1. Charnière (1) pour un boîtier d'armoire de commande, avec une première et une deuxième moitiés de charnière (2, 3), qui peuvent être reliées entre elles par l'intermédiaire d'une tige de charnière (4) et qui peuvent pivoter l'une par rapport à l'autre autour d'un axe longitudinal (x) de la tige de charnière (4), dans laquelle la tige de charnière (4) s'étend, dans une position de déverrouillage, uniquement vers l'intérieur de la première ou la deuxième moitié de charnière (2, 3) et s'étend, dans une position de verrouillage, aussi bien vers l'intérieur de la première que vers l'intérieur de la deuxième moitié de charnière (2, 3), dans laquelle la tige de charnière (4) est bloquée de manière amovible, aussi bien dans la position de déverrouillage que dans la position de verrouillage, par l'intermédiaire d'au moins une languette élastique (5), **caractérisée en ce que** la languette élastique (5) comprend une portion de serrage (9) qui s'étend le long d'une circonférence externe d'un manchon de tige de charnière (7, 8) de la première ou de la deuxième moitié de charnière (2, 3), ainsi qu'un cliquet de blocage (10) moulé au niveau de la portion de serrage (9), qui s'étend dans la direction radiale du manchon de tige de charnière (7, 8), dans laquelle la languette élastique (5) comprend une contre-butée (13) qui est moulée sur la portion de serrage (9) à une certaine distance du cliquet de blocage (10), et dans laquelle la languette élastique (5) est une pièce façonnée en tôle qui comprend le cliquet de blocage (10) au niveau d'une première de deux extrémités opposées de la portion de serrage (9) conçue comme une bande de tôle et comprend la contre-butée (13) au niveau d'une deuxième des deux extrémités opposées.

2. Charnière (1) selon la revendication 1, dans laquelle la tige de charnière (4) comprend, le long de son axe longitudinal (x), un premier et un deuxième évidement (6) distants entre eux, plus particulièrement une première et une deuxième rainures annulaires, dans laquelle la languette élastique (5) s'emboîte, dans la position de déverrouillage, dans le premier évidement (6) et s'emboîte, dans la position de verrouillage, dans le deuxième évidement (6).

3. Charnière (1) selon la revendication 1 ou 2, dans laquelle une des moitiés de charnière (2, 3) comprend un premier manchon de tige de charnière (7) avec une première languette élastique (5) et un deuxième manchon de tige de charnière (8) avec une deuxième languette élastique (5).

4. Charnière (1) selon la revendication 3, dans laquelle les manchons de tiges de charnière (7, 8) sont disposés le long de l'axe longitudinal (x) de la tige de charnière (4) à une certaine distance entre eux, dans laquelle, dans la position de déverrouillage, la tige de charnière (4) n'est bloquée que par la première languette élastique (5) et dans laquelle, dans la position de verrouillage, la tige de charnière (4) est bloquée par les première et deuxième languettes élastiques (5).

5. Charnière (1) selon la revendication 1, dans laquelle le cliquet de blocage (10) s'étend à travers le manchon de tige de charnière (7, 8) à travers un passage (11) s'étendant dans la direction radiale du manchon de tige de charnière (7, 8) et est précontraint dans la direction radiale par la portion de serrage (9).

6. Charnière (1) selon la revendication 1, dans laquelle au moins un parmi le cliquet de blocage (10), les premier et deuxième évidements (6), comprend, au niveau d'au moins un parmi deux bords de délimitation, distants entre eux dans la direction longitudinale de la tige de charnière (4), un chanfrein d'entrée (12).

7. Charnière (1) selon la revendication 1, dans laquelle la contre-butée (13) s'étend dans un autre passage (11.1) s'étendant, dans la direction radiale du manchon de tige de charnière (7, 8), à travers le manchon de tige de charnière (7, 8).

8. Charnière (1) selon la revendication 7, dans laquelle l'autre passage (11.1) est disposé de manière décalée autour de l'axe longitudinal (x) d'un angle d'au moins 90° et de préférence d'un angle de globalement 180° par rapport au passage (11) pour le cliquet de blocage (10).

9. Boîtier d'armoire de commande avec un corps d'armoire de commande (100) et un élément de porte (200) fixé à celui-ci par l'intermédiaire d'au moins une charnière (1) selon l'une des revendications précédentes.
